Europäisches Patentamt

(19) European Patent Office (11) Publication number: **0 132 074**

Office européen des brevets **A1**

(12) **EUROPEAN PATENT APPLICATION**

(21) Application number: **84304463.7** (51) Int. Cl.⁴: **F 16 F 1/28**
**B 60 G 11/12**

(22) Date of filing: **29.06.84**

(30) Priority: **16.07.83 GB 8319282** (71) Applicant: **GKN TECHNOLOGY LIMITED**
**Birmingham New Road**
**Wolverhampton WV4 6BW(GB)**

(43) Date of publication of application:
**23.01.85 Bulletin 85/4** (72) Inventor: **Tucker-Peake, Adrian**
**Beggars Roost 17 Lancaster Avenue**
**Rubery Birmingham(GB)**

(84) Designated Contracting States:
**IT**
(72) Inventor: **Hemmings, Graham**
**17 Watts Close Lynwood Park**
**Tipton West-Midlands(GB)**

(74) Representative: **Dodd, Graham Marshall et al,**
**Guest Keen and Nettlefolds plc Group Patents and**
**Licensing Department P.O. Box 55 Ipsley House Ipsley**
**Church Lane**
**Redditch Worcestershire B98 0TL(GB)**

(54) Leaf springs of composite material.

㊐ A leaf spring of composite, F.R.P., material with an attachment member eg a bush (12) lying in a recess (11) extending transversely of an end portion (10) of the spring, held therein by a clamping member (13) extending around the attachment member (13) and lying against surfaces of a spring part (16) adjacent the terminal position, wherein parts (14,15) of the clamping member are held to the spring by a sheet metal element (17) extending transversely around the spring and deformed into engagement with recesses provided either in the parts (14,15) of the clamping member or in separate elements (20,21) thereon.

FIG.1

GMD/P83.047
PATENTS ACT 1977

Title: Leaf Springs of Composite Material.

DESCRIPTION OF INVENTION

This invention relates to leaf springs made of composite, fibre reinforced plastics, material. More particularly, the invention relates to an end fitting by which a composite leaf spring can be secured to a motor vehicle or other apparatus or equipment where it is to be used.

It has been proposed, in our published European Patent Application 0070122, that an end fitting for a composite leaf spring can comprise an attachment member lying within a recess extending transversely of the spring at a terminal portion thereof, and a clamping member extending around the attachment member and said terminal portion of the spring, and secured to the spring adjacent said terminal portion to hold the attachment member in the recess. The clamping member is of sheet metal, and has parts which extend along opposed surfaces of the spring adjacent the terminal portion thereof, spaced in the direction of bending of the spring.

It is proposed in our European Patent Application aforesaid that the parts of the clamping member extending along the spaced surfaces of the spring adjacent its terminal portion can be secured by bolts or other fasteners passing through the spring, or by a strap extending transversely around the parts of the clamping member and spring. The strap may be welded eg spot welded, to the clamping member to secure it in position.

Such methods have disadvantages. The provision of apertures in the spring to accept fasteners destroys the integrity of the fibres therein and hence may affect the characteristics of the spring. To weld in close proximity of the spring may damage it due to excessive temperatures being reached in the plastics component of the composite.

It is the object of the present invention to provide an improved mode of securing the clamping member to the spring, which is effective in use, economical in manufacture and overcomes or reduces the above disadvantages.

The present invention provides a composite leaf spring including, at an end thereof, an attachment member lying in a recess extending transversely of a terminal portion of the spring and held therein by a clamping member extending around said attachment member and terminal portion and having parts extending along spaced surfaces of the spring adjacent said terminal portion, characterised in that said clamping member is held to the spring by a sheet metal element extending transversely around said parts of the clamping member and deformed into engagement with recess means in or associated therewith.

By the use of a sheet metal element or strap, deformed to hold the clamping member to the spring, the necessity of piercing the spring to accept fasteners is avoided. Also avoided is the possible damaging effect to the composite spring material of welding in close proximity thereto. The manufacturing operation of deforming the sheet metal element is readily performed using a relatively simple press, and is hence inexpensive.

The recess means may be formed in the clamping member and may comprise an aperture in one or each respective part thereof. Alternatively, the recess means may be provided in a further element interposed between the sheet metal element and the or each respective part of the clamping element. The latter expedient has the advantage that the spring itself is not likely to be damaged during the operation of deforming the sheet metal element into the recess means.

The arrangement may be such as to prevent the sheet metal element from being bent in too tight radii at its corners. This eliminates the possibility of failure of the sheet metal elements from excessive deformation.

These and other features of the invention will now be described by way of example with reference to the accompanying drawings, of which:

Figure 1 is a side elevation of an end fitting of a spring according to the invention;

Figure 2 is an underneath view of the spring of Figure 1;

Figure 3 is a section on the line 3-3 of Figure 1;

Figure 4 is a section as Figure 3, but prior to deformation of the sheet metal strap.

Figure 5 is a side elevation of a further embodiment of spring according to the invention;

Figure 6 is an underneath view of the spring of Figure 5;

Figure 7 is à section on the line 7-7 of Figure 5;

Figures 8 and 9 are sections as Figure 7, showing further embodiments of the invention.

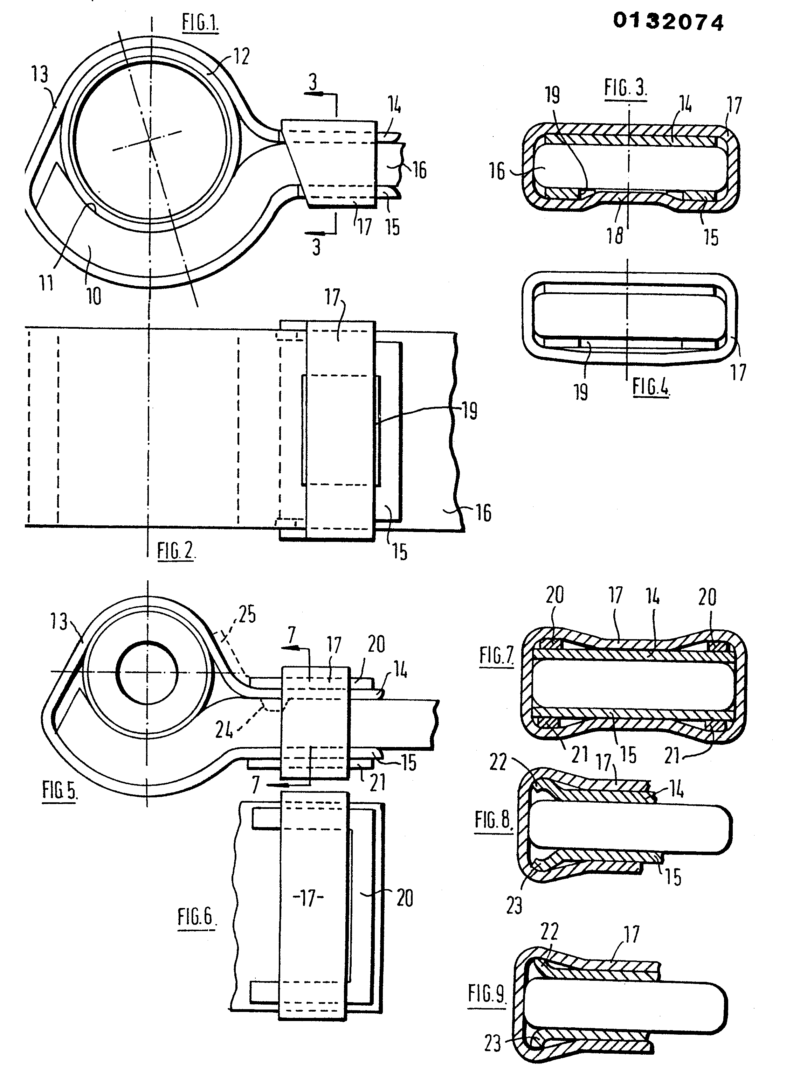

Referring firstly to Figures 1, 2 and 3 of the drawings, there is shown an end of a leaf spring of composite material comprising fibres, e.g. glass fibres, set in a matrix of a plastics resin material such as a suitable epoxy resin. A terminal portion 10 of the spring defines a transversely extending recess 11 which accommodates an attachment member in the form of a bush 12. The bush 12 may be the outer part of a well known metal-rubber-metal bush. The attachment member is held in the recess 11 of the spring by a clamping member 13 which is of sheet metal, e.g. steel and which extends around the attachment member 12 and terminal portion 10. Parts 14, 15 of the clamping member lie against spaced surfaces of the part 16 of the spring adjacent the terminal portion thereof, which surfaces are spaced in the direction of bending of the spring in service. The attachment member 12 may be welded, e.g. projection welded, to the clamping member 13.

The parts 14, 15 of the clamping member are held to the spaced surfaces of the spring 16 by a sheet metal element in the form of strap 17 extending transversely therearound. To tighten the strap 17 so that the parts 14, 15 of the clamping member are securely held, a part 18 of the strap is deformed into an aperture 19 provided in the part 15 of the clamping member. An aperture may also be provided in part 15 of the clamping member.

The condition of strap 17 prior to final assembly is shown in Figure 4. It is relatively slack enabling it to be fitted over the parts 14, 15 of the clamping member when the latter is positioned on the spring. A suitable pressing device can be used to deform the strap 17 into aperture 19 firmly to secure the clamping member and attachment member to the spring.

Referring now Figures 5, 6 and 7 of the drawings, there is here shown an embodiment similar to that of Figures 1 to

- 5 -

3, and like parts are given like reference numerals.  In this case, however, no aperture is provided in the part 15 of the clamping member.  Instead, further elements 20, 21 are interposed between the strap 17 and the parts 14, 15, and these elements define recesses or apertures into which the strap 17 is deformed.   The presence of complete apertures ensures location of strap 17 longitudinally of the spring.   The elements 20, 21 may be generally of U-shape, as shown in Figure 6 to define recesses, or may define complete apertures into which strap 17 is deformed.  It will be appreciated that it may be sufficient for only one element such as 20 or 21 to be provided, with the strap 17 deformed in one position if this enables it to be tightened sufficiently.   The use of elements 20, 21 spreads loads across the spring during deformation of strap 17.

Referring now to Figure 8 of the drawings, this shows an embodiment in which edge portions 22, 23 of the parts 14, 15 of the clamping member are upturned to define recesses into which the strap 17 is deformed.   The configuration of upturned edges 22, 23 is such that the bending of strap 17 at too sharp a radius is avoided.  Further, it is ensured that the strap 17 engages the sides of the spring to provide positive lateral location between the clamping member and spring.

Referring now to Figure 9 of the drawings, this shows a section corresponding to Figure 8 but in which the edges 22, 23 of the clamping member parts 14, 15 are upturned in a simpler section than that of Figure 8.  However, deformation of strap 17 into too tight radii at these edges is still avoided.  The free ends of parts 14, 15 may also be upturned to provide additional rigidity and provide a local radius to prevent damage to the spring.

Referring back now to Figure 5 of the drawings, this shows a further feature according to a modification of the invention. The part 14 of the clamping member is provided with a formation 24 extending towards the part 15, which formation engages a correspondingly shaped recess in the spring itself. Such a recess would be formed during manufacture of the spring, by subjecting resin impregnated fibres to heat and pressure in a mould to cure the resin and form the spring to its final shape. The engagement of formation 24 in such recess provide for positive location of the clamping member relative to the spring, and is particularly effective as helping to resist forces acting longitudinally of the spring which try to pull the attachment member 12 from recess 11. The configuration of formation 24 and the corresponding recess in the spring would of course be selected so as not to weaken the spring adjacent its terminal portion.

As shown in Figures 5 and 6, the strap 17 may be a simple component of uniform width, or it may, as shown in Figures 1 and 2, be of different widths in its parts overlying the parts 14, 15 of the clamping member. The latter embodiment is advantageous in that it provides a firmer hold of the clamping member adjacent the region where it diverges from the terminal portion of the spring to contact the bush 12.

In the embodiments shown in Figure 5 et seq., element 20 may be extended as shown at 25 to contact the clamping member 13 where it diverges from the terminal portion of the spring. This reinforces the clamping member so that it does not distort under forces acting longitudinally of the spring tending to pull member 12 from recess 11.

CLAIMS

1.  A composite leaf spring including, at an end thereof, an attachment member (12) lying in a recess (11) extending transversely of a terminal portion (10) of the spring and held therein by a clamping member (13) extending around said attachment member (12) and terminal portion (10) and having parts (14,15) extending along spaced surfaces of a spring part (16) adjacent said terminal portion, (10) characterised in that said clamping member (13) is held to the spring (16) by a sheet metal element (17) extending transversely around said parts (14,15) of the clamping member (13) and deformed into engagement with recess means (19) in or associated therewith.

2.  A spring according to Claim 1 further characterised in that said recess means (19) is formed in at least one of said parts (14,15) of the clamping member (13).

3.  A spring according to Claim 1 or Claim 2 further characterised in that said recess means (19) comprises an aperture.

4.  A spring according to Claim 1 further characterised in that said recess means is provided in a further element (20,21) interposed between said sheet metal element (17) and the or each said part (14,15) of the clamping member(13).

5.  A spring according to Claim 1 or Claim 2 further characterised in that said recess means is defined by an upturned edge portion (22,23) or portions on at least one of said parts (14,15) of the clamping member (13).

6.  A spring according to Claim 5 further characterised in that said edge portion (22,23) or portions is of a configuration such as to prevent said sheet metal element (17) from being bent in too tight a radius.

- 8 -

0132074

7. A spring according to any one of the preceding claims further characterised in that said clamping member (13) includes a protruding formation (24) engaging in a correspondingly shaped recess in the spring (16) adjacent said terminal portion thereof.

0132074

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | EP-A-0 070 122 (GKN TECHNOLOGY LTD.) <br> * Page 4, line 24 - page 5, line 17; figure 2 * | 1,7 | F 16 F    1/28 <br> B 60 G   11/12 |
| D,A | | 2-6 | |
| A | US-A-2 123 772 (F.L. JACOB CO.) <br> * Page 1, column 2, lines 7-60; figures 3-7 * | 1-3,6 | |
| A | FR-A- 745 689 (P.A. CARTERET) <br> * Page 2, lines 50-57; page 2, lines 92-102; figure 4 * | 1,2,7 | |
| A | PATENTS ABSTRACTS OF JAPAN, vol. 7, no. 261(M-257)(1406), 19th November 1983; & JP - A - 58 142 044 (HORIKIRI BANE SEISAKUSHO K.K.) 23-08-1983 | 1 | **TECHNICAL FIELDS SEARCHED (Int. Cl. ³)** <br><br> F 16 F    1/00 <br> B 60 G   11/00 <br> B 23 P   11/00 |
| A | PATENTS ABSTRACTS OF JAPAN, vol. 3, no. 105(M-71), 5th September 1979, page 57M71; & JP - A - 54 79343 (TORAY K.K.) 25-06-1979 | 1 | |

The present search report has been drawn up for all claims

| Place of search | Date of completion of the search | Examiner |
|---|---|---|
| THE HAGUE | 26-09-1984 | KEEN C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82